# EUROPEAN PATENT APPLICATION

(11) **EP 3 467 294 A1**
(43) Date of publication of application: **10.04.2019**
(21) Application number: 17819187.0
(22) Date of filing: 24.06.2017
(51) Int. Cl.: F02M 37/22

(54) **FILTRATION SYSTEM FOR DIESEL ENGINE FOR USE IN COMMUNICATION APPARATUS SET**

(30) Priority: 30.06.2016 CN 201610503925
(71) Applicant: Huawei Technologies Co., Ltd., Longgang District Shenzhen, Guangdong 518129 (CN)
(72) Inventor: ZHANG, Hongzhan, Shenzhen Guangdong 518129 (CN)
(74) Representative: Thun, Clemens
(86) International application number: PCT/CN2017/089889
(87) International publication number: WO 2018/001190

(57) **Abstract**

The present invention discloses a generator filtering system of a communications generating set, including a first filter (1), a second filter (2), and an oil path (4). The fuel inlet port (3) is disposed on the oil path (4), and is at a position between the first filter (1) and the second filter (2), so that fuel entering the fuel inlet port (3) is divided into two paths of fuel that respectively pass through the first filter (1) and the second filter (2). After a structure of the oil path and a manner in which the oil path and the filter are connected are designed, congestion is relieved, and maintenance time is reduced. After a structure of the oil path and a manner in which the oil path and the filter are connected are designed, congestion is relieved, and maintenance time is reduced. After the structure of the oil path and a manner in which the oil path and the filter are connected are changed, congestion can be relieved without reducing an amount of to-be-filtered fuel, so that a maintenance frequency is reduced.

## Description

This application claims priority to Chinese Patent Application No. 201610503925.7, filed with the Chinese Patent Office on June 30, 2016 and entitled "GENERATOR FILTERING SYSTEM OF COMMUNICATIONS GENERATING SET", which is incorporated herein by reference in its entirety.

### TECHNICAL FIELD

The present invention relates to the field of filtering technologies, and in particular, to a generator filtering system of a communications generating set.

### BACKGROUND

Communications generating sets of a base station are located in remote areas in which transportation is poor and maintenance costs are high. To resolve a customer difficulty, a maintenance interval of the communications generating set should be prolonged as much as possible. Three measures to prolong the maintenance interval are a diesel fuel tank with a large capacity, an enlarged air filter, oil filter, and diesel fuel filter, and auto oil supply.

In the prior art, a water-fuel separator and a diesel fuel filter are connected in a low-pressure oil line in series. The water-fuel separator can not only separate water from diesel fuel, but also perform pre-filtering, and is used for first-level filtering. A feature of this solution is that there are two types of filters that usually have different filter density. Two types of spare parts also need to be prepared. To increase a maintenance interval 500 h of an original small diesel fuel filter to 1000 h, the original small diesel fuel filter needs to be replaced with an enlarged diesel fuel filter after the first maintenance. Actual use indicates that when diesel fuel is relatively dirty, congestion is prone to occur in a first-level filter element. Other solutions also have similar disadvantages. More importantly, two levels of filter elements should have different filter density, that is, the first-level filter element performs coarse filtering, and a second-level filter element performs fine filtering. Mistake-proofing design needs to be provided, and the two levels of filter elements should not be installed in reversed order. Two same filter elements should not be installed either. In actual application, this case has actually occurred. Consequently, the second-level filter element cannot function, and after congestion occurs in the first-level filter element, engine performance is affected and a maintenance interval of a generating set cannot be prolonged. This solution is used for a type of generating set. After the generating set operates for hundreds of hours, it is found that severe congestion occurs in the first-level filter element. Two levels of filter elements are tested under a same condition. 500-ml diesel fuel passes through the first-level filter element in a 36-min time, and passes through the second-level filter element in a time of only 20s. After two filters are disassembled, it is found that there is an obvious contrast between congestion degrees.

### SUMMARY

Embodiments of the present invention provide a generator filtering system of a communications generating set, to resolve the following prior-art problem: Because congestion usually occurs in a filter element, filtering performance is affected, and consequently maintenance needs to be frequently performed. After a structure of an oil path and a manner in which the oil path and a filter are connected are properly designed, congestion can be relieved without reducing an amount of to-be-filtered fuel, so that a maintenance frequency is reduced.

A first aspect provides a generator filtering system of a communications generating set, including a first filter (1), a second filter (2), and an oil path (4), where both the first filter (1) and the second filter (2) are connected to the oil path (4), and the oil path (4) has a fuel inlet port (3) and a fuel outlet port (11);
the first filter (1) has an inlet (5) and an outlet (6), and the second filter (2) has an inlet (7) and an outlet (8);
the fuel inlet port is at a position between the first filter (1) and the second filter (2), so that fuel entering the fuel inlet port (3) is divided into two paths of fuel that flow into the first filter (1) and the second filter (2) respectively through the inlet (5) of the first filter (1) and the inlet (7) of the second filter (2); and
the outlet (6) of the first filter (1) is configured to output, to the oil path (4), fuel that is obtained after filtering is performed and that enters the first filter (1) through the inlet (5) of the first filter (1), and the outlet (8) of the second filter (2) is configured to output, to the oil path (4), fuel that is obtained after filtering is performed and that enters the second filter (2) through the inlet (7) of the second filter (2), so that the fuel obtained after the first filter (1) and the second filter (2) perform filtering is output from the filtering system by using the fuel outlet port (11) of the oil path (4).

In the present invention, after a structure of the oil path and a manner in which the oil path and the filter are connected are properly designed, specifically, the fuel inlet port (3) is disposed on the oil path (4), and is at the position between the first filter (1) and the second filter (2), so that the fuel entering the fuel inlet port (3) is divided into two paths of fuel that flow into the first filter (1) and the second filter (2) respectively through the inlet (5) of the first filter (1) and the inlet (7) of the second filter (2), when a filtering amount is not reduced, the following prior-art problem is avoided: Because a first-level filter needs to perform filtering first, congestion is prone to occur, and a second-level filter cannot functions. Therefore, congestion can be relieved without reducing an amount of to-be-filtered fuel, so that a maintenance frequency is reduced.

With reference to the first aspect, in a first possible implementation of the first aspect, the oil path (4) is of a ring structure.

With reference to the first aspect and the first possible implementation of the first aspect, in a second possible implementation of the first aspect, along the ring oil path, the fuel outlet port (11), the first filter (1), the fuel inlet port (3), and the second filter (2) are connected to the oil path (4) in the following order: fuel outlet port (11)->first filter (1)->fuel inlet port (3)->second filter.

With reference to any one of the first aspect, or the first to the second possible implementations of the first aspect, in a third possible implementation of the first aspect, a fuel separation sheet (12) is disposed at a position that is in the oil path (4) and that is corresponding to the fuel inlet port (3), and is configured to divide the fuel inlet port (3) into two branches, and the two branches are respectively connected to the inlet (5) of the first filter (1) and the inlet (7) of the second filter (2).

With reference to any one of the first aspect, or the first to the third possible implementations of the first aspect, in a fourth possible implementation of the first aspect, a barrier sheet (9) is disposed at a position that is in the oil path (4) and that is between the inlet (5) and the outlet (6), and a barrier sheet (10) is disposed at a position that is in the oil path (4) and that is between the inlet (7) and the outlet (8), so that the fuel entering the oil path through the fuel inlet port (3) is blocked, and the fuel entering the oil path through the fuel inlet port (3) flows into the first filter (1) and the second filter (2) respectively through the inlet (5) of the first filter (1) and the inlet (7) of the second filter (2).

With reference to any one of the first aspect, or the first to the fourth possible implementations of the first aspect, in a fifth possible implementation of the first aspect, the inlet (5) of the first filter (1) and the inlet (7) of the second filter (2) are symmetrically disposed with respect to the fuel inlet port (3).

With reference to any one of the first aspect, or the first to the fifth possible implementations of the first aspect, in a sixth possible implementation of the first aspect, the barrier sheet (9) and the barrier sheet (10) are symmetrically disposed with respect to the fuel inlet port (3), so that the fuel entering the fuel inlet port (3) is evenly divided into two paths of fuel that flow into the first filter (1) and the second filter (2) respectively through the inlet (5) of the first filter (1) and the inlet (7) of the second filter (2).

With reference to any one of the first aspect, or the first to the sixth possible implementations of the first aspect, in a seventh possible implementation of the first aspect, the outlet (6) of the first filter (1) and the outlet (8) of the second filter (2) are symmetrically disposed with respect to the fuel outlet port (11).

A second aspect provides a communications generating set, including a communications device and a generator, where the generator is configured to supply power to the communications device, and the generator includes the generator filtering system of a communications generating set according to any one of claims 1 to 8.

In the present invention, first, to-be-filtered fuel flows into the filtering system through the fuel inlet port (3);
next, the fuel entering the fuel inlet port (3) is divided into two paths of fuel that flow into the first filter (1) and the second filter (2) respectively through the fuel inlet port (5) and the fuel inlet port (7); and
further, fuel obtained after the first filter (1) performs filtering is output to the oil path (4) by using the fuel outlet port (6), and fuel obtained after the second filter (2) performs filtering is output to the oil path (4) by using the fuel outlet port (8), so that the fuel obtained after the first filter (1) and the second filter (2) perform filtering is output from the filtering system by using the fuel outlet port (11) of the oil path (4). In the present invention, after the ring structure of the oil path, a position of a fuel inlet port, and a manner in which the oil path and the filter are connected are properly designed, congestion can be relieved without reducing an amount of to-be-filtered fuel, so that a maintenance frequency is reduced.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a generator filtering system of a communications generating set according to the prior art;
FIG. 2 is a schematic structural diagram of a generator filtering system of a communications generating set according to Embodiment 1 of the present invention;
FIG. 3 is a schematic structural diagram of a generator filtering system of a communications generating set according to Embodiment 2 of the present invention; and
FIG. 4 is a schematic structural diagram of a generator filtering system of a communications generating set according to Embodiment 3 of the present invention.

### DESCRIPTION OF EMBODIMENTS

To make the objectives, technical solutions, and advantages of the present invention clearer, the following further describes the embodiments of the present invention in detail with reference to the accompanying drawings.

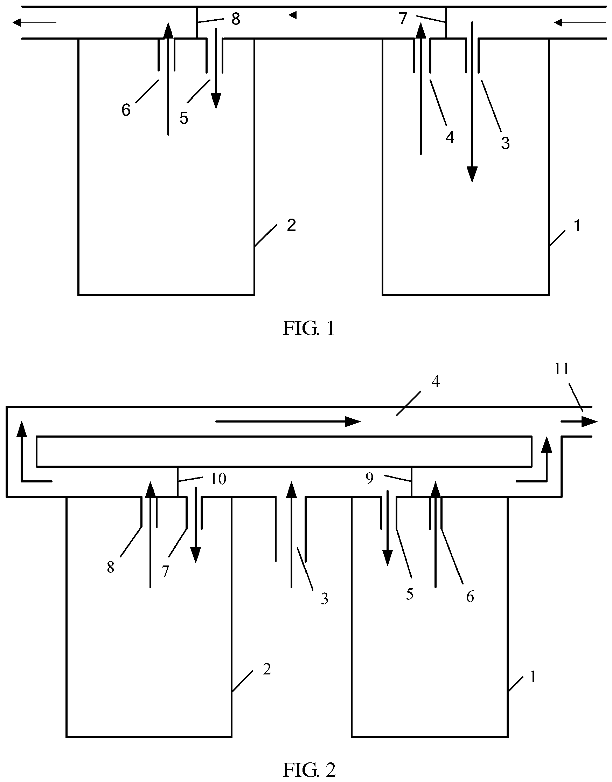

As shown in FIG. 1, FIG. 1 is a schematic structural diagram of a generator filtering system of a communications generating set according to the prior art.

After congestion occurs in a first-level filter, a second-level filter has difficulty in achieving a filtering purpose.

As shown in FIG. 2, FIG. 2 shows a generator filtering system of a communications generating set according to an embodiment of the present invention. The generator filtering system of a communications generating set includes:
a first filter (1), a second filter (2), and an oil path (4). Both the first filter (1) and the second filter (2) are connected to the oil path (4).

The oil path (4) has a fuel inlet port (3) and a fuel outlet port (11).

The first filter (1) has an inlet (5) and an outlet (6), and the second filter (2) has an inlet (7) and an outlet (8).

The fuel inlet port (3) is disposed on the oil path (4), and is at a position between the first filter (1) and the second filter (2), so that fuel entering the fuel inlet port (3) is divided into two paths of fuel that flow into the first filter (1) and the second filter (2) respectively through the inlet (5) of the first filter (1) and the inlet (7) of the second filter (2).

The outlet (6) of the first filter (1) is configured to output, to the oil path (4), fuel that is obtained after filtering is performed and that enters the first filter (1) through the inlet (5) of the first filter (1), and the outlet (8) of the second filter (2) is configured to output, to the oil path (4), fuel that is obtained after filtering is performed and that enters the second filter (2) through the inlet (7) of the second filter (2), so that the fuel obtained after the first filter (1) and the second filter (2) perform filtering is output from the filtering system by using the fuel outlet port (11) of the oil path (4).

In the present invention, first, to-be-filtered fuel flows into the filtering system through the fuel inlet port (3);
next, the fuel entering the fuel inlet port (3) is divided into two paths of fuel that flow into the first filter (1) and the second filter (2) respectively through the fuel inlet port (5) and the fuel inlet port (7); and
further, fuel obtained after the first filter (1) performs filtering is output to the oil path (4) by using the fuel outlet port (6), and fuel obtained after the second filter (2) performs filtering is output to the oil path (4) by using the fuel outlet port (8), so that the fuel obtained after the first filter (1) and the second filter (2) perform filtering is output from the filtering system by using the fuel outlet port (11) of the oil path (4) and is input into a fuel injection pump.

In the present invention, after a ring structure of the oil path, a position of the fuel inlet port, and a manner in which the oil path and the filter are connected are properly designed, congestion can be relieved without reducing an amount of to-be-filtered fuel, so that a maintenance frequency is reduced.

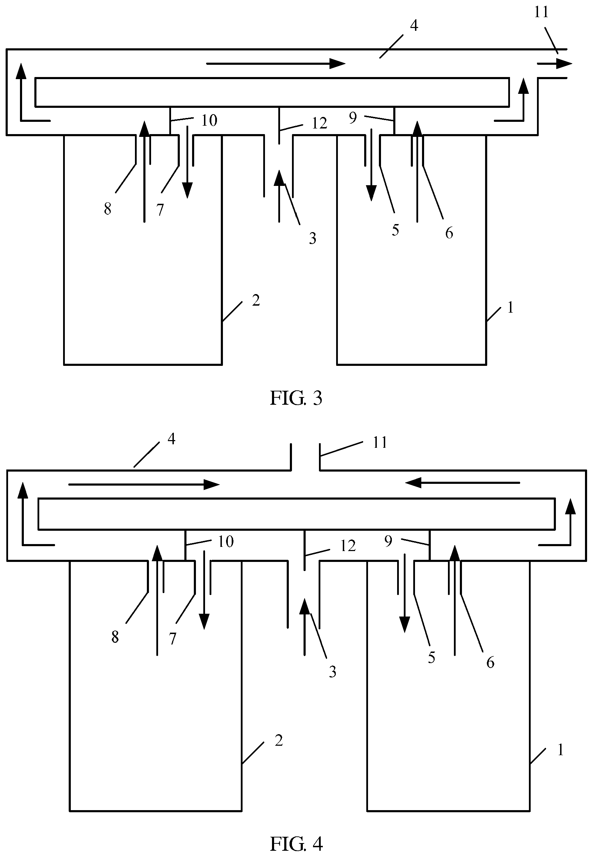

As shown in FIG. 3, FIG. 3 shows another generator filtering system of a communications generating set according to an embodiment of the present invention. The generator filtering system of a communications generating set includes:
a first filter (1), a second filter (2), and an oil path (4). Both the first filter (1) and the second filter (2) are connected to the oil path (4).

The oil path (4) has a fuel inlet port (3) and a fuel outlet port (11).

The first filter (1) has an inlet (5) and an outlet (6), and the second filter (2) has an inlet (7) and an outlet (8).

The fuel inlet port (3) is disposed on the oil path (4), and is at a position between the first filter (1) and the second filter (2), so that fuel entering the fuel inlet port (3) is divided into two paths of fuel that flow into the first filter (1) and the second filter (2) respectively through the inlet (5) of the first filter (1) and the inlet (7) of the second filter (2).

The outlet (6) of the first filter (1) is configured to output, to the oil path (4), fuel that is obtained after filtering is performed and that enters the first filter (1) through the inlet (5) of the first filter (1), and the outlet (8) of the second filter (2) is configured to output, to the oil path (4), fuel that is obtained after filtering is performed and that enters the second filter (2) through the inlet (7) of the second filter (2), so that the fuel obtained after the first filter (1) and the second filter (2) perform filtering is output from the filtering system by using the fuel outlet port (11) of the oil path (4).

Optionally, the oil path (4) is of a ring structure.

Optionally, the fuel outlet port (11), the first filter (1), the fuel inlet port (3), and the second filter (2) are sequentially connected to the oil path (4) in arrangement order in space.

Optionally, a fuel separation sheet (12) is disposed, in the oil path (4), at a middle position of the fuel inlet port (3), and is configured to divide the fuel inlet port (3) into two branches. The two branches are respectively connected to the inlet (5) of the first filter (1) and the inlet (7) of the second filter (2).

Optionally, a barrier sheet (9) is disposed at a position that is in the oil path (4) and that is between the inlet (5) and the outlet (6), and a barrier sheet (10) is disposed at a position that is in the oil path (4) and that is between the inlet (7) and the outlet (8), so that the fuel entering the fuel inlet port (3) flows into the first filter (1) and the second filter (2) respectively through the inlet (5) of the first filter (1) and the inlet (7) of the second filter (2).

Optionally, the first filter (1) and the second filter (2) have a same structure.

Optionally, the first filter (1) and the second filter (2) have a same capacity.

Optionally, the inlet (5) of the first filter (1) and the inlet (7) of the second filter (2) are symmetrically disposed with respect to the fuel inlet port (3).

Optionally, the barrier sheet (9) and the barrier sheet (10) are symmetrically disposed with respect to the fuel inlet port (3), so that the fuel entering the fuel inlet port (3) is evenly divided into two paths of fuel that flow into the first filter (1) and the second filter (2) respectively through the inlet (5) of the first filter (1) and the inlet (7) of the second filter (2).

In the present invention, first, to-be-filtered fuel flows into the filtering system through the fuel inlet port (3);
next, the fuel entering the fuel inlet port (3) is divided into two paths of fuel that flow into the first filter (1) and the second filter (2) respectively through the fuel inlet port (5) and the fuel inlet port (7); and
further, fuel obtained after the first filter (1) performs filtering is output to the oil path (4) by using the fuel outlet port (6), and fuel obtained after the second filter (2) performs filtering is output to the oil path (4) by using the fuel outlet port (8), so that the fuel obtained after the first filter (1) and the second filter (2) perform filtering is output from the filtering system by using the fuel outlet port (11) of the oil path (4) and is input into a fuel injection pump. In the present invention, after the ring structure of the oil path, a position of the fuel inlet port, and a manner in which the oil path and the filter are connected are properly designed, congestion can be relieved without reducing an amount of to-be-filtered fuel, so that a maintenance frequency is reduced.

As shown in FIG. 4, FIG. 4 shows another generator filtering system of a communications generating set according to an embodiment of the present invention. On the basis of the filtering system shown in FIG. 3, a position of the fuel outlet port (11) is limited in FIG. 4, so that the outlet (6) of the first filter (1) and the outlet (8) of the second filter (2) are symmetrically disposed with respect to the fuel outlet port (11). This is corresponding to the case in which the inlet (5) of the first filter (1) and the inlet (7) of the second filter (2) are symmetrically disposed with respect to the fuel inlet port (3) in FIG. 3, so that the two filters in the filtering system operate independently and fuel that needs to be filtered is evenly allocated to the two filters. In the present invention, after the ring structure of the oil path, the position of the fuel inlet port, and a manner in which the oil path and the filter are connected are properly designed, congestion can be relieved without reducing an amount of to-be-filtered fuel, so that a maintenance frequency is reduced.

The sequence numbers of the foregoing embodiments of the present invention are only for illustrative purposes, and are not intended to indicate priorities of the embodiments.

The foregoing descriptions are only example embodiments of the present invention, but are not intended to limit the present invention. Any modification, equivalent replacement, and improvement made without departing from the spirit and principle of the present invention shall fall within the protection scope of the present invention.

## Claims

1. A generator filtering system of a communications generating set, comprising a first filter (1), a second filter (2), and an oil path (4), wherein both the first filter (1) and the second filter (2) are connected to the oil path (4), and the oil path (4) has a fuel inlet port (3) and a fuel outlet port (11);
the first filter (1) has an inlet (5) and an outlet (6), and the second filter (2) has an inlet (7) and an outlet (8);
the fuel inlet port is at a position between the first filter (1) and the second filter (2), so that fuel entering the fuel inlet port (3) is divided into two paths of fuel that flow into the first filter (1) and the second filter (2) respectively through the inlet (5) of the first filter (1) and the inlet (7) of the second filter (2); and
the outlet (6) of the first filter (1) is configured to output, to the oil path (4), fuel that is obtained after filtering is performed and that enters the first filter (1) through the inlet (5) of the first filter (1), and the outlet (8) of the second filter (2) is configured to output, to the oil path (4), fuel that is obtained after filtering is performed and that enters the second filter (2) through the inlet (7) of the second filter (2), so that the fuel obtained after the first filter (1) and the second filter (2) perform filtering is output from the filtering system by using the fuel outlet port (11) of the oil path (4).

2. The generator filtering system of a communications generating set according to claim 1, wherein the oil path (4) is of a ring structure.

3. The generator filtering system of a communications generating set according to claim 1 or 2, wherein along the ring oil path, the fuel outlet port (11), the first filter (1), the fuel inlet port (3), and the second filter (2) are connected to the oil path (4) in the following order: fuel outlet port (11)->first filter (1)->fuel inlet port (3)->second filter.

4. The generator filtering system of a communications generating set according to claim 3, wherein a fuel separation sheet (12) is disposed at a position that is in the oil path (4) and that is corresponding to the fuel inlet port (3), and is configured to divide the fuel inlet port (3) into two branches, and the two branches are respectively connected to the inlet (5) of the first filter (1) and the inlet (7) of the second filter (2).

5. The generator filtering system of a communications generating set according to claim 4, wherein a barrier sheet (9) is disposed at a position that is in the oil path (4) and that is between the inlet (5) and the outlet (6), and a barrier sheet (10) is disposed at a position that is in the oil path (4) and that is between the inlet (7) and the outlet (8), so that the fuel entering the oil path through the fuel inlet port (3) is blocked, and the fuel entering the oil path through the fuel inlet port (3) flows into the first filter (1) and the second filter (2) respectively through the inlet (5) of the first filter (1) and the inlet (7) of the second filter (2).

6. The generator filtering system of a communications generating set according to claim 5, wherein the inlet (5) of the first filter (1) and the inlet (7) of the second filter (2) are symmetrically disposed with respect to the fuel inlet port (3).

7. The generator filtering system of a communications generating set according to claim 6, wherein the barrier sheet (9) and the barrier sheet (10) are symmetrically disposed with respect to the fuel inlet port (3), so that the fuel entering the fuel inlet port (3) is evenly divided into two paths of fuel that flow into the first filter (1) and the second filter (2) respectively through the inlet (5) of the first filter (1) and the inlet (7) of the second filter (2).

8. The generator filtering system of a communications generating set according to claim 7, wherein the outlet (6) of the first filter (1) and the outlet (8) of the second filter (2) are symmetrically disposed with respect to the fuel outlet port (11).

9. A communications generating set, comprising a communications device and a generator, wherein the generator is configured to supply power to the communications device, and the generator comprises the generator filtering system of a communications generating set according to any one of claims 1 to 8.
